# EUROPÄISCHE PATENTANMELDUNG

(11) **EP 2 902 284 A1**
(43) Veröffentlichungstag der Anmeldung: **05.08.2015**
(21) Anmeldenummer: 14000334.4
(22) Anmeldetag: 29.01.2014
(51) Int. Cl.: B60T 17/22

(54) **Verbindungsvorrichtung**

(71) Anmelder: Stähle, Kurt, 75242 Neuhausen-Steinegg (DE)
(72) Erfinder: Stähle, Dieter, D-75233 Tiefenbronn (DE)
(74) Vertreter: Wacker, Jost Oliver

(57) **Zusammenfassung**

Eine Verbindungsvorrichtung (2) für eine Aktuatorvorrichtung (4) zur Betätigung eines Fußpedals (8) eines Kraftfahrzeuges weist eine Pedalaufnahme (20) für die Aufnahme des Fußpedals (8) und eine Klemmeinrichtung (14) für die Festlegung des in der Aufnahme (20) aufgenommenen Fußpedals (8) auf. Dabei ist vorgesehen, dass die Pedalaufnahme (20) einen Pedalanschlag (16) mit mindestens zwei zueinander beabstandeten Kontaktzonen (24) für die Anlage an einer Pedaloberseite (10) und ein in Richtung des Pedalanschlages (16) verlagerbares Zugankerelement (18) für die Anlage an einer Pedalunterseite (12) aufweist und an der Klemmeinrichtung (14) eine Führung (32) des Zugankerelementes (18) gegenüber dem Pedalanschlag (16) vorgesehen ist.

## Beschreibung

Die Erfindung betrifft eine Verbindungsvorrichtung für eine Aktuatorvorrichtung zur Betätigung eines Fußpedals eines Kraftfahrzeuges, die beispielsweise Bestandteil eines Fahrroboters oder eines Prüfstandes ist, nach dem Oberbegriff des Anspruchs 1. Diese Verbindungsvorrichtung bildet eine Pedalaufnahme für die Aufnahme des betreffenden Fußpedals aus und weist eine Klemmeinrichtung auf, die geeignet ist, das in der Aufnahme aufgenommene Fußpedal an der Verbindungsvorrichtung festzulegen.

Aus WO 2011/069669 A2 ist eine Stellvorrichtung für einen Fahrroboter bekannt. Diese weist am Ende einer Betätigungsstange eine U-förmige Pedalaufnahme auf. Mittels einem in die Pedalaufnahme hineinragenden Schraubenkopf ist hierbei ein Festklemmen eines in der Pedalaufnahme angeordneten Fußpedals möglich.

Nachteilig an der bekannten Verbindungsvorrichtung ist, dass mit dieser an vielen Fußpedalen nur eine unzureichend stabile Festlegung erzielt werden kann und es daher im Betrieb insbesondere zu Positionsänderungen des Pedals gegenüber der Verbindungsvorrichtung oder gar zu einem vollständigen Abrutschen der Verbindungsvorrichtung von diesem kommen kann. Dies kann wiederum zu einer nur unzureichend genauen Steuerung des Fußpedals durch die jeweilige Aktuatorvorrichtung oder zu ungenauen Versuchsergebnissen führen.

Die Aufgabe der Erfindung ist es, bei einer gattungsgemäßen Verbindungsvorrichtung für Fußpedale die genannten Nachteile zu vermeiden und eine stabile und exakte Festlegung von unterschiedlichen Fußpedalen zu ermöglichen.

Diese Aufgabe wird durch eine Verbindungsvorrichtung mit den Merkmalen des Anspruchs 1 gelöst. Dabei weist die Pedalaufnahme einen Pedalanschlag mit mindestens zwei zueinander beabstandeten Kontaktzonen für die Anlage an einer Pedaloberseite und ein in Richtung des Pedalanschlages verlagerbares Zugankerelement für die Anlage an einer Pedalunterseite auf. Zudem weist die Klemmeinrichtung eine insbesondere lineare Führung des Zugankerelementes gegenüber dem Pedalanschlag auf. Durch die hierbei verwendeten zueinander beabstandeten Kontaktzonen des Pedalanschlages, kann dieser in einer definierten Lage auf eine Pedaloberseite aufgesetzt werden. Anschließend kann er dann durch die Verlagerung des Zugankerelementes in eine Anschlagsposition an einer Pedalunfierseite in dieser Position gesichert werden. Die durch die zueinander beabstandeten Kontaktzonen gebildeten Auflagepunkte des Pedalanschlages verhindern in dieser eingespannten Stellung der Verbindungsvorrichtung an dem Fußpedal insbesondere, dass diese relativ zueinander eine Kippbewegung ausführen können. Insgesamt kann somit eine besonders stabile Festlegung des Fußpedals an der Verbindungsvorrichtung erzielt werden, die auch über einen längeren Betrieb der Aktuatorvorrichtung hinweg, eine stabile Position des Fußpedals gegenüber der Verbindungsvorrichtung gewährleistet.

In einer besonders vorteilhaften Ausführungsform weist die lineare Führung eine mit dem Pedalanschlag fest verbundene Führungsaufnahme auf. Dabei ist das Zugankerelement an einer Schiene gehalten, die entlang der Führungsaufnahme verlagerbar ist. Durch diese geführt verschiebbare Lagerung des Zugankerelementes gegenüber dem Pedalanschlag kann ein Bewegungsspiel des Zugankerlementes gegenüber dem Pedalanschlag, insbesondere bei aktiver Klemmstellung der Verbindungsvorrichtung, auf ein Minimum reduziert werden.

Dabei ist es günstig, wenn die Schiene mit einem Spannelement verbunden ist. Das Spannelement kann hierbei durch jede bekannte und geeignete Spannvorrichtung gebildet sein. Auf diese Weise kann das an der Schiene gelagerte Zugankerelement auch ohne dessen direkte Betätigung in eine Klemmstellung an dem jeweiligen Pedal gebracht werden.

Hierbei ist das Spannelement vorteilhafterweise als Gewindeelement ausgebildet, das mit einem gegenüber dem Pedalanschlag verdrehbaren Gegengewinde zusammen wirkt. Hierdurch ist eine stufenlose Verstellung des Abstandes des Zugankerelementes gegenüber dem Pedalanschlag und eine stabile Festlegung des Zugankerlementes gegenüber dem Pedalanschlag in einer am Pedal hergestellten Klemmstellung möglich.

Vorteilhafterweise ist dabei zwischen dem Gegengewinde und dem Pedalanschlag eine Vorspannfeder eingespannt, mittels der ein selbsttätiges Nachspannen der Schraubverbindung möglich ist, beispielsweise um leichte Verstellungen des Fußpedals in Folge von im Betrieb auftretenden Vibrationen oder Größenänderungen in Folge von Temperaturschwankungen ausgleichen zu können.

Zudem ist es günstig, wenn zwischen den mindestens zwei Kontaktzonen ein Freiraum vorgesehen ist. Durch den Hohlraum können Unebenheiten oder Wölbungen des Fußpedals, die sich zwischen den beiden Kontaktzonen befinden überbrückt werden. Hierdurch ist beispielsweise auch bei Pedalen mit einer stark gekrümmten Pedaloberseite eine stabile und insbesondere kippfreie Auflage möglich.

Vorteilhafterweise sind die mindestens zwei Kontaktzonen durch plastisch oder plastisch verformbare Kontaktelemente gebildet, wodurch die Kontaktzonen bei der Herstellung einer Klemmverbindung mit dem Fußpedal vorgespannt werden können. Hierdurch kann der Pedalanschlag bei der Herstellung der Klemmverbindung an die jeweilige Form des betreffenden Pedals angepasst und ein besonders fester Sitz des Pedalanschlages an dem Fußpedal erreicht werden. Zudem kann durch die verformbaren Kontaktelemente im Betrieb die Übertragung von Vibrationen zwischen dem Fußpedal und der Aktuatorvorrichtung reduziert werden. Durch Verwendung von Kontaktelementen mit einer rauen, geriffelten oder haftenden Oberfläche kann hierbei zudem der Reibschluss zwischen dem Pedalanschlag und der Pedaloberseite erhöht werden. Alternativ hierzu können die Kontaktzonen, insbesondere bei Verwendung an einem Pedal mit einer elastisch oder plastisch verformbaren Pedaloberseite, auch starr ausgebildet sein, wobei die Kontaktzonen auch in diesem Fall zur Erhöhung des Grips mit einer rauen oder geriffelten Oberfläche versehen sein können.

Ferner ist es günstig, wennder Pedalanschlag mindestens drei umlaufend angeordnete und zueinander beabstandete Kontaktzonen aufweist, wodurch der Pedalanschlag in statisch bestimmter beziehungsweise überbestimmter Weise auf die Pedaloberseite aufgesetzt werden kann, um einen stabilen und kippfreien Klemmsitz zu ermöglichen.

In einer weiteren vorteilhaften Ausführungsform weist das Zugankerelement eine sich im Wesentlichen linear erstreckende Form auf, wodurch es positionsstabil mit beliebig geformten Pedalunterseiten in Anschlag gebracht werden kann.

Dabei ist es günstig, wenn das Zugankerelement durch einen im Wesentlichen parallel zum Pedalanschlag ausgerichteten Metallstab gebildet ist, wodurch das Zugankerelement die betreffenden Pedalunterseite über einen im Wesentlichen linearen Kontaktbereich mit einer relativ großen Klemmkraft beaufschlagen kann.

In einer besonders vorteilhaften Ausführungsform ist an dem Zugankerelement ein Punktlagerelement vorgesehen, das über einen im Wesentlichen punktförmigen Kontaktbereich an die jeweilige Pedalunterseite angelegt werden kann. Hierdurch kann beim Herstellen der Klemmstellung eine besonders gleichmäßige Verteilung der Stützkräfte an den Kontaktelementen erzielt werden, was wiederum eine besonders stabile Festlegung der Verbindungsvorrichtung an dem Pedal gewährleistet.

In den Figuren ist eine beispielhafte Ausführungsform der Erfindung dargestellt. Es zeigen:
- Figur 1: eine perspektivische Ansicht einer erfindungsgemäßen Verbindungsvorrichtung in einer aktiven Klemmstellung an einem Fußpedal,
- Figur 2: eine perspektivische Ansicht der Verbindungsvorrichtung nach Fig. 1 bei abgenommenem Fußpedal,
- Figur 3: eine geschnittene Ansicht der Verbindungsvorrichtung nach Fig. 2 in einer ersten Endanschlagsstellung,
- Figur 4: eine geschnittene Ansicht der Verbindungsvorrichtung nach Fig. 2 in einer zweiten Endanschlagsstellung und
- Figur 5: eine geschnittene Ansicht der Verbindungsvorrichtung nach Fig. 1 in aktiver Klemmstellung an dem Fußpedal.

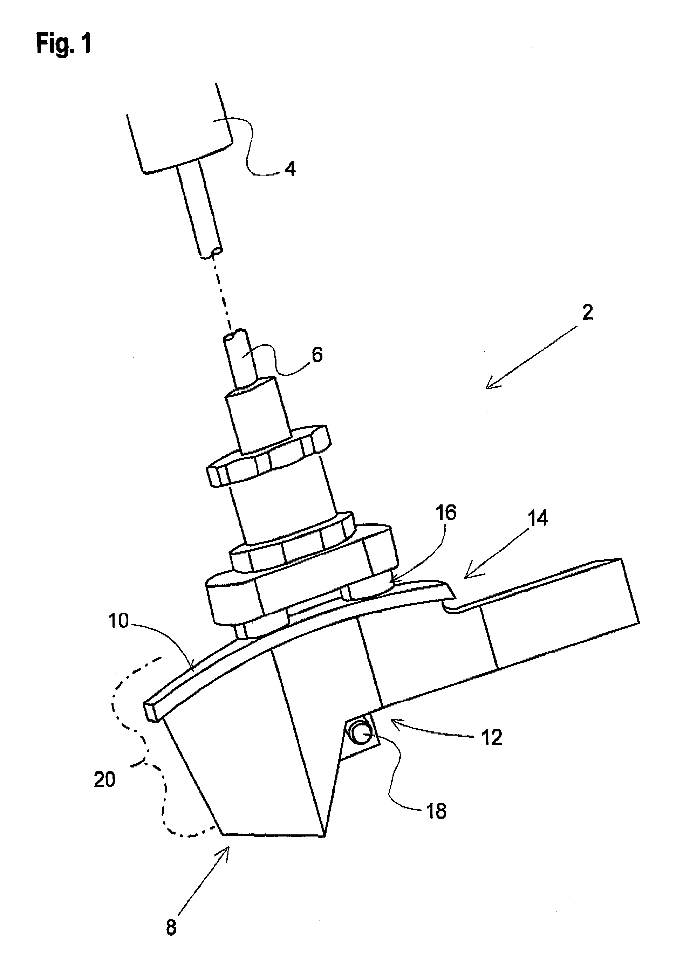

Fig. 1 zeigt eine Verbindungsvorrichtung 2 einer Aktuatorvorrichtung 4, die beispielsweise Teil eines Fahrroboters ist. Die Verbindungsvorrichtung 2 dient hierbei zur Verbindung einer Betätigungsstange 6 der Aktuatorvorrichtung 4 mit einem Fußpedal 8 eines nicht dargestellten Kfz.

Das Fußpedal 8 wird hierbei in unveränderter Form verwendet wie im normalen Fahrbetrieb des Kfz. Dabei weist das Fußpedal 8 eine gewölbte Pedaloberseite 10 auf, an die üblicherweise eine Sohle des Fahrers angelegt wird, sowie eine von dieser abgewandte Pedalunterseite 12. Insbesondere die Form der Pedalunterseite 12 kann hierbei von Fahrzeug zu Fahrzeug stark variieren.

Zur sicheren Verbindung mit dem Fußpedal 8 ist an der Verbindungsvorrichtung 2 eine Klemmeinrichtung 14 vorgesehen. Diese weist unter anderem einen Pedalanschlag 16 und ein durch einen Metallstab gebildetes Zugankerelement 18 auf, die zusammen eine Pedalaufnahme 20 begrenzen, in der das Fußpedal 8 aufgenommen ist.

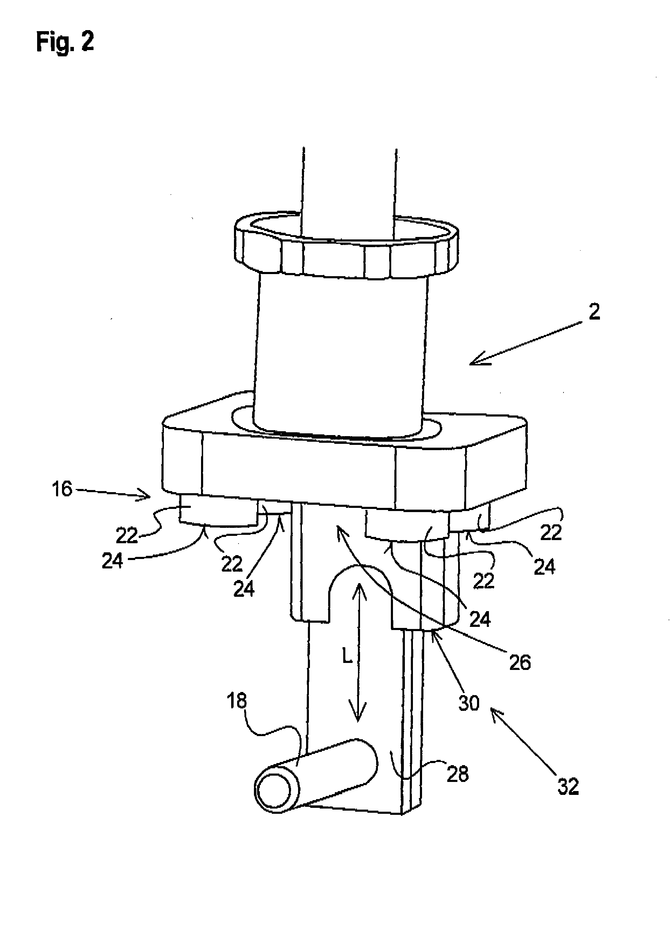

Wie insbesondere aus Fig. 2 zu entnehmen ist, sind an dem Pedalanschlag 16 vier Kontaktelemente 22 vorgesehen, die jeweils aus einem elastische oder plastisch verformbaren Material gebildet sind. Die Kontaktelemente 22 bilden auf diese Weise vier zueinander beabstandete Kontaktzonen 24, die in einem Viereck angeordnet sind und dabei zwischen sich einen Freiraum 26 bilden.

Die Kontaktelemente 22 werden beim Anbringen der Verbindungsanordnung 2 an dem Fußpedal 8 auf dessen Pedaloberseite 10 aufgesetzt, wie in Fig. 1 dargestellt. Durch den sich zwischen den Kontaktelementen 22 erstreckenden Freiraum 26 kann die gewölbte Form der Pedaloberseite 10 hierbei problemlos am Pedalanschlag 16 aufgenommen werden. Um zudem eine hohe Rutschfestigkeit zwischen dem Pedalanschlag 16 und dem Fußpedal 8 zu gewährleisten, können die Kontaktelemente 22 außerdem zumindest an den Kontaktzonen 24 eine geriffelte, aufgeraute oder haftend wirkende Oberfläche aufweisen.

Wie aus Fig. 2 ferner zu entnehmen ist, ist das Zugankerelement 18 durch einen Metallstab gebildet, der quer von einer Schiene 28 absteht. Das Zugankerelement 18 erstreckt sich hierbei linear und im Wesentlichen parallel zu einer von den Kontaktzonen 24 aufgespannten Ebene. In dieser parallelen Ausrichtung ist der Abstand des Zugankerelementes 18 gegenüber dem Pedalanschlag 16 stufenlos verstellbar.

Hierzu ist die Schiene 28 in einer Führungsaufnahme 30 verschiebbar gehalten, wie durch Pfeil L angedeutet. Die Schiene und die Führungsaufnahme 30 bilden auf diese Weise zusammen eine lineare Führung 32 des Zugankerelementes 18.

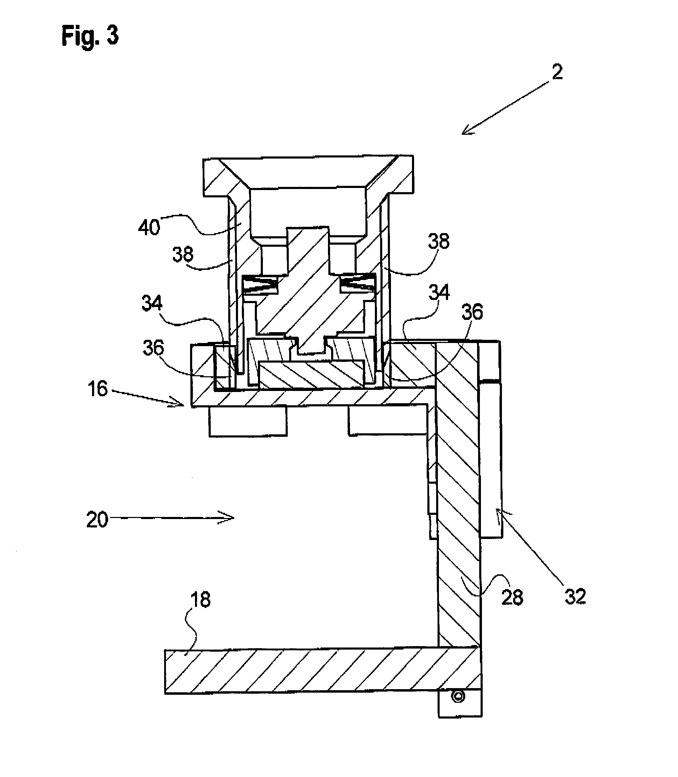

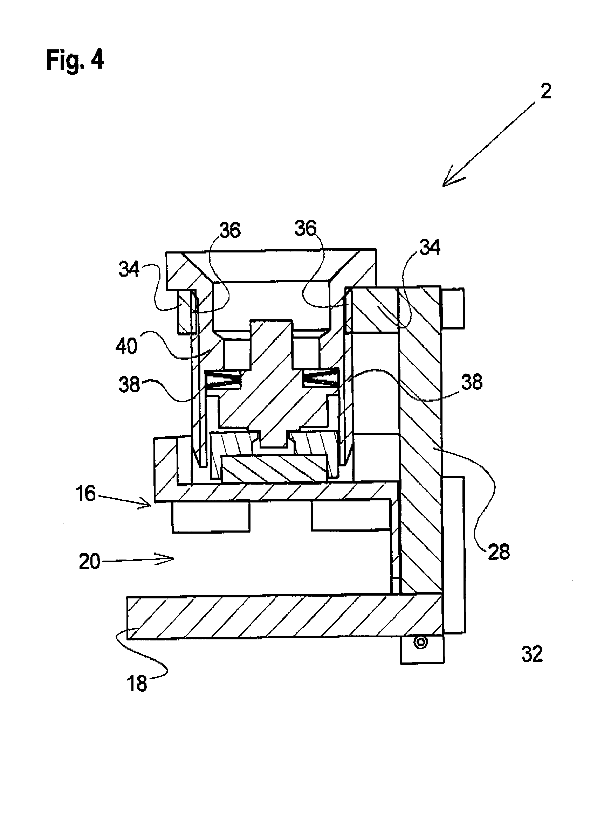

Um die Schiene 28 mit dem daran gelagerten Zugankerelement 18 entlang der linearen Führung 32 stufenlos verstellen zu können und damit beispielsweise das in der Pedalaufnahme 20 aufgenommene Fußpedal 8 festzuklemmen, ist die Schiene mit einem Spannelement 34 in Form eines ringförmigen Gewindeelementes 34 verbunden, wie in Fig. 3 und 4 dargestellt. Dieses Spannelement 34 weist ein Innengewinde 36 auf, das in ein als Außengewinde ausgebildetes Gegengewinde 38 einer zylinderförmigen Klemmschraube 40 greift. Diese Klemmschraube 40 ist wiederum verdrehbar an der Oberseite des Pedalanschlages 16 gelagert.

In der in Fig. 3 gezeigten Stellung ist das Zugankerelement 18 in eine erste Endanschlagstellung verbracht, in der dieses den maximalen Abstand gegenüber dem Pedalanschlag 16 aufweist. In dieser ersten Endanschlagstellung weist auch die Pedalaufnahme 20 ihre maximale Erstreckung auf.

Durch Verdrehen der Klemmschraube 40 gegenüber dem Pedalanschlag 16 wird das Spannelement 34, das mit der linearen Führung 32 verbunden ist und dadurch gegenüber dem Pedalanschlag zwar linear verschiebbar aber nicht verdrehbar ist, nach oben geschraubt und verlagert dabei auch die Schiene 28 mit dem davon abragenden Zugankerelement 18.

Diese Bewegung kann bis zu einer zweiten Endanschlagsposition ausgeführt werden, in der das Zugankerelement 18 einen minimalen Abstand gegenüber dem Pedalanschlag 16 aufweist, wie in Fig. 4 dargestellt. In dieser Endanschlagstellung weist auch die Pedalaufnahme 20 ihre minimale Erstreckung auf.

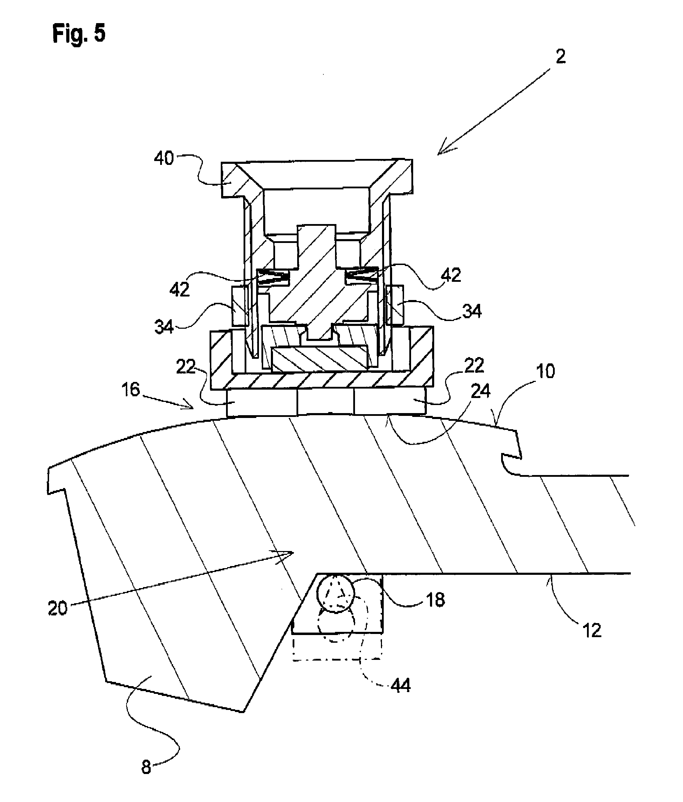

Um die Verbindungsvorrichtung 2 mit einem Fußpedal 8 verbinden zu können, muss die Pedalaufnahme 20 gegebenenfalls durch Drehen der Klemmschraube 40 zunächst soweit geöffnet werden, dass die Kontaktelemente 22 auf die Pedaloberseite 10 aufgesetzt werden können. Anschließend wird dann durch entgegen gesetztes Verdrehen der Klemmschraube 40 das Zugankerelement 18 soweit in Richtung des Pedalanschlages 16 verlagert bis er an der Pedalunterseite 12 in Anschlag kommt und das Fußpedal 8 dabei zwischen den Kontaktzonen 24 und dem Zugankerelement 18 festgeklemmt wird, wie in Fig. 5 dargestellt.

Alternativ zu der hierbei dargestellten linienförmigen Anlage des stabförmigen Zugankerelementes 18 ist es dabei alternativ auch möglich, ein beispielsweise keilförmiges Punktlagerelement 44 an dem Zugankerelement 18 beziehungsweise an der Schiene 28 vorzusehen, wie in Fig. 5 durch strichpunktierte Linien dargestellt. Über dieses kann das Zugankerelement 18 im Wesentlichen punktförmig gegen die Pedalunterseite 12 gespannt werden, was zu einer relativ gleichmäßigen Verteilung der Reaktionskräfte an den Kontaktelementen 22 führt.

Hierbei wird die Klemmschraube 40 bevorzugterweise so fest angezogen, dass die elastischen Kontaktelemente 22 eine Vorspannung aufweisen.

Um hierbei eine im Betrieb gelegentlich auftretende Nachgebebewegung des Fußpedals 8 ausgleichen zu können, die beispielsweise durch Vibrationen oder durch Temperaturschwankungen hervorgerufen werden kann, ist die Klemmschraube 40 hierbei unter Zwischenlage einer Vorspannfeder 42 an dem Pedalanschlag 16 abgestützt. Diese dient im Betrieb zum selbsttätigen Nachspannen der Verbindungsvorrichtung 2.

Falls die Klemmverbindung zwischen der Verbindungsvorrichtung 2 und dem Fußpedal 8 wieder getrennt werden soll, wird das Zugankerelement 18 durch Verdrehen der Klemmschraube 40 wieder in Richtung des ersten Endanschlages gemäß Fig. 3 gedreht, bis die Pedalaufnahme 20 wieder soweit geöffnet ist, dass die Verbindungsvorrichtung 2 vom Fußpedal 8 abgenommen werden kann.

## Patentansprüche

1. Verbindungsvorrichtung (2) für eine Aktuatorvorrichtung (4) zur Betätigung eines Fußpedals (8) eines Kraftfahrzeuges
mit einer Pedalaufnahme (20) für die Aufnahme des Fußpedals (8) und
einer Klemmeinrichtung (14) für die Festlegung des in der Aufnahme (20) aufgenommenen Fußpedals (8),
**dadurch gekennzeichnet, dass** die Pedalaufnahme (20) einen Pedalanschlag (16) mit mindestens zwei zueinander beabstandeten Kontaktzonen (24) für die Anlage an einer Pedaloberseite (10) und ein in Richtung des Pedalanschlages (16) verlagerbares Zugankerelement (18) für die Anlage an einer Pedalunterseite (12) aufweist und
an der Klemmeinrichtung (14) eine Führung (32) des Zugankerelementes (18) gegenüber dem Pedalanschlag (16) vorgesehen ist.

2. Verbindungsvorrichtungnach Anspruch 1, **dadurch gekennzeichnet, dass** die lineare Führung (32) eine mit dem Pedalanschlag (16) fest verbundene Führungsaufnahme (30) aufweist und das Zugankerelement (18) an einer Schiene (28) gehalten ist, die entlang der Führungsaufnahme (30) verlagerbar ist.

3. Verbindungsvorrichtung nach Anspruch 2, **dadurch gekennzeichnet, dass** die Schiene (28) mit einem Spannelement (34) verbunden ist.

4. Verbindungsvorrichtung nach Anspruch 3, **dadurch gekennzeichnet, dass** das Spannelement (34) als Gewindeelement ausgebildet ist, das mit einem gegenüber dem Pedalanschlag (16) verdrehbaren Gegengewinde (38) zusammen wirkt.

5. Verbindungsvorrichtung nach Anspruch 3 oder 4, **dadurch gekennzeichnet, dass** zwischen dem Spannelement (34) und dem Pedalanschlag (16) eine Vorspannfeder (42) eingespannt ist.

6. Verbindungsvorrichtung nach einem der Ansprüche 1 bis 5, **dadurch gekennzeichnet, dass** zwischen den mindestens zwei Kontaktzonen (24) ein Freiraum (26) vorgesehen ist.

7. Verbindungsvorrichtung nach einem der Ansprüche 1 bis 6, **dadurch gekennzeichnet, dass** die mindestens zwei Kontaktzonen (24) durch elastisch oder plastisch verformbare Kontaktelemente (22) gebildet sind.

8. Verbindungsvorrichtung nach einem der Ansprüche 1 bis **7,dadurch gekennzeichnet, dass** der Pedalanschlag (16) mindestens drei umlaufend angeordnete und zueinander beabstandete Kontaktzonen (24) aufweist.

9. Verbindungsvorrichtungnach einem der Ansprüche 1 bis 8, **dadurch gekennzeichnet, dass** das Zugankerelement (18) eine sich im Wesentlichen linear erstreckende Form aufweist.

10. Verbindungsvorrichtung nach Anspruch 8, **dadurch gekennzeichnet, dass** das Zugankerelement (18) durch einen im Wesentlichen parallel zum Pedalanschlag (16) ausgerichteten Metallstab gebildet ist.

11. Verbindungsvorrichtung nach einem der Ansprüche 1 bis 10, **dadurch gekennzeichnet, dass** an dem Zugankerelement (18) ein Punktlagerelement (44) vorgesehen ist.
